(19) Europäisches Patentamt
European Patent Office
Office européen des brevets

(11) **EP 4 289 105 B1**

(12) **EUROPEAN PATENT SPECIFICATION**

(45) Date of publication and mention
of the grant of the patent:
**18.02.2026  Bulletin 2026/08**

(21) Application number: **22700720.0**

(22) Date of filing: **05.01.2022**

(51) International Patent Classification (IPC):
*H04L 9/00* *(2022.01)*      *H04L 9/32* *(2006.01)*

(52) Cooperative Patent Classification (CPC):
**H04L 9/3239; H04L 9/50**

(86) International application number:
**PCT/EP2022/050155**

(87) International publication number:
**WO 2022/167165 (11.08.2022 Gazette 2022/32)**

(54) **BLOCKCHAIN TREE STRUCTURE**

BLOCKCHAIN-BAUMSTRUKTUR

STRUCTURE D'ARBRE À CHAÎNE DE BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **05.02.2021  GB 202101589**

(43) Date of publication of application:
**13.12.2023  Bulletin 2023/50**

(73) Proprietor: **nChain Licensing AG
6300 Zug (CH)**

(72) Inventors:
• **PAGANI, Alessio
London W1W 8AP (GB)**
• **WRIGHT, Craig Steven
London W1W 8AP (GB)**

(74) Representative: **Page White Farrer
Bedford House
21a John Street
London WC1N 2BF (GB)**

(56) References cited:
**WO-A1-2020/109908      WO-A1-2020/240296
WO-A1-2020/256998**

**Description**

## TECHNICAL FIELD

The present disclosure relates to a method of creating different versions of a tree structure overlaid on a blockchain, and to a method of accessing a version of the tree structure.

## BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

A blockchain network is already a type of overlay network overlaid on an underlying network such as the Internet. However, it also possible to overlay a further layer of overlay network on a blockchain. An example of this is known as the Metanet. Each node of the Metanet is a different transaction on a blockchain (note "node" is now being used in a different sense, not to refer to a node of the blockchain network but rather a node of the Metanet). Data content and Metanet metadata is stored in a payload of each such transaction, in an unspendable output of the transaction by means of an OP_RETURN or other means such OP_PUSHDATA. The data content is the actual user content which the Metanet is being used to store, e.g. text, images, video or audio content, etc.; whilst the metadata defines links between Metanet nodes. The links or edges between Metanet nodes do not necessarily correspond to spending edges at the blockchain layer. I.e. if the input of a given Metanet transaction points to an output of another, funding transaction at the blockchain layer, the parent of that same transaction or Metanet node at the Metanet layer is not necessarily the same transaction as the funding transaction. Instead the links or edges at the Metanet layer define links between the data content of the Metanet.

WO 2020/109908 A1 discloses methods and systems for storing, sharing retrieving, writing and accessing data (content) on a blockchain. The method may form part of a protocol for storing, searching and accessing the data. An embodiment of the method comprises the step of processing at least one blockchain transaction (Tx) comprising: a protocol flag; a discretionary public key (DPK); and a discretionary transaction ID (DTx ID). These are discretionary in the sense that they are not required as part of the underlying blockchain protocol but in accordance with the present invention. This combination of features enables portions of data to be identified, retrieved and shared on a blockchain, and also to be linked/associated with one another when provided in a plurality of transactions. It enables a graph or tree-like structure to be constructed, which reflects the hierarchical relationships between portions of data, facilitating their processing, searching and sharing.

## SUMMARY

The objects of the present invention are achieved by means of the appended set of claims.

The Metanet is designed to be a static structure, where when a new node is added to a tree then it cannot be removed. Nodes can be deemed invalid using different techniques (e.g., spending the relative UTXOs), but they cannot be separated from the tree (the link cannot be cancelled). This can be a limitation when the tree is updated frequently, as it grows significantly, and wallet applications and other applications have to download and process all the nodes, including the invalid ones. Similar considerations may apply to other forms of overlay network overlaid on a blockchain, not just the Metanet.

This present disclosure presents a solution based on a graph structure overlaid on a blockchain, such as a Metanet-based graph, that can be used to create different versions (i.e. views) of the graph structure. Note that the term "tree structure" is used interchangeably with the term "graph structure". These terms may be shorted to tree and graph respectively. For instance in embodiments, a new Metanet protocol referred to herein as the Metanet Flux Protocol (MFP), allows different versions of a Metanet graph to be created and accessed, e.g. depending on the user who is accessing the graph. In some examples, the version of the graph may depend upon the time and/or day upon which the graph is accessed. In other words, instead of a Metanet graph being limited to having a single, static structure, the MFP allows for varying (i.e. dynamic) structures, hence the term "flux".

Dynamic trees allow the creation of nodes according to some off-chain conditions (e.g., time, username). Thus time-variant, customizable and user-specific trees may be created. These trees offer more privacy, as each user can have a different and personalised view of the same tree (multi-view trees) and the edges can be obfuscated. Moreover, it generates a more scalable structure, as old branches and nodes may be automatically removed from the tree structure. In addition, dynamic trees can be used to embed weights and Proof of Work in these trees

According to one aspect disclosed herein, there is provided a computer-implemented method of creating different versions of a tree structure overlaid on a blockchain, the tree structure comprising a set of nodes and edges between nodes, wherein each node is a different transaction recorded on the blockchain, wherein each edge connects from a respective child node to a respective parent node, wherein one of the parent nodes is a root node of the tree structure, wherein each node is associated with a respective key, wherein each child node comprises i) a respective transaction identifier, and ii) a signature corresponding to the respective key associated with the respective parent node, and wherein the method is performed by a tree creator and comprises: creating one or more target child nodes of a target parent node, each target child node comprising a respective data payload; and forming a respective edge between each target child node and the target parent node by associating each of the target child nodes with a respective link identifier, wherein the respective link identifier is based on at least one off-chain parameter.

As mentioned above, previous implementations of tree structures (e.g. the Metanet) have been confined to having a single version. That is, all users view (i.e. can access) the same nodes of the tree. In contrast, embodiments of the present invention enable the creation of different versions of the same tree. Two or more versions of a tree are considered to be versions of the same tree if those versions have the same root node. A root node is described in detail below. The tree creator creates at least one child node of an existing parent node. The parent node may or may not be the root node. The tree creator forms an edge between each new child node and the parent node. Each edge is formed by associating each child node with a respective link identifier (ID). The link ID identifies the edge (i.e. link) connecting the child node to the parent node. Each link ID is based on one or more off-chain parameters. An off-chain parameter may be any parameter (e.g. string or value) that is not specific to the blockchain. An off-chain parameter may instead be defined as any parameter that is not generated as part of the underlying blockchain protocol.

Examples of off-chain data include a day, month, year, name, address, postcode, username, email address, etc. In contrast, a transaction identifier (generated by hashing the contents of a transaction) is an example of an on-chain parameter. Note that a link ID may still be generated based on a transaction identifier, but it must also be based on one or more off-chain parameters (e.g. TxID and day).

In some embodiments only one child node is created. This may be useful when the child node should only be accessible according to one condition, e.g. on a particular day, or by a particular user. Similarly, multiple child nodes may be created which are connected to the parent node using the same link ID. In that case, those nodes are only accessible according to the same one condition. Both of these examples still create multiple versions of the same tree structure. In one version, the child node(s) are present whereas in the other version the child node(s) are not present. For instance, the link ID may be based on a particular day (e.g. Monday). A user attempts to access child nodes of the parent node whose link ID based on the present day. If the user generates a link ID based on the day "Monday", then the nodes will be retrieved. In contrast, if the user generates a link ID based on the day "Tuesday", then no nodes will be found and retrieved. Thus the link ID may be considered as being valid only on a Monday.

In other embodiments, the tree creator creates multiple child nodes of the same existing parent node (i.e. an existing transaction). At least two of the new child nodes may be associated with a different link ID. Therefore at least two different versions of the tree structure are created and thus can be accessed depending on the link ID used to link a new child node to the parent node. For instance, a link ID may be based on a user identifier (e.g. username). When a user (or machine) accesses the tree structure, the user can choose to obtain only child nodes having a link ID based on their username. Thus one user, Alice, may view a version of the tree having only the child node with a link ID based on her username (e.g. Alice123) whilst another user, Bob, may view a version of the tree having only the child node with a link ID based on his username (e.g. Bob456). Alice and Bob's usernames may be hashed to preserve their privacy. The child nodes may contain data specific to a particular user. It will be appreciated that a tree having only the child node with a particular link ID does not exclude the tree having other nodes, e.g. the parent node of that child node, and any other nodes tracing back to the root node.

According to one aspect disclosed herein, there is provided a computer-implemented method of accessing a tree structure overlaid on a blockchain, the tree structure comprising a set of nodes and edges between nodes, wherein each node is a different transaction recorded on the blockchain, wherein each edge connects from a respective child node to a respective parent node, wherein one of the parent nodes is a root node of the tree structure, wherein each node is associated with a respective key, wherein each child node comprises i) a respective transaction identifier, and ii) a signature corresponding to the respective key associated with the respective parent node, wherein a target parent node is connected to a plurality of target child nodes, each target child node comprising a respective data payload, wherein each of the target child nodes is associated with a respective link identifier, wherein the respective link identifier is based on at least one off-chain parameter, and wherein the method is performed by a tree accessor and comprises: obtaining the target parent node; obtaining one or more link identifiers; identifying one or more of the target child nodes that are associated with a respective one of the obtained one or more link identifiers; and creating a version of the tree structure comprising one or more of the identified target child nodes, but not those target child nodes that are not identified as being associated with a respective one of the obtained one or more link identifiers.

## BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3 is a schematic illustration of a network overlaid on a blockchain;

Figure 4 is a schematic transaction diagram illustrating an example protocol for overlaying a network such as the Metanet on a blockchain;

Figure 5 schematically illustrates the concept of node versioning in the context of an overlay network such as the Metanet,

Figure 6 schematically illustrates the concept of node deletion in the context of an overlay network such as the Metanet,

Figure 7 is a schematic block diagram of an example system for implementing embodiments disclosed herein,

Figure 8 schematically illustrates an example of a dynamic tree structure having different views at different times,

Figures 9A and 9B schematically illustrates a static tree structure and a dynamic tree structure, respectively,

Figures 10A and 10B schematically illustrate non-obfuscated edges and obfuscated edges, respectively,

Figure 11 is a schematic flow chart showing an example method in accordance with some embodiments disclosed herein,

Figure 12 schematically illustrates the retrieval of only valid child nodes, and

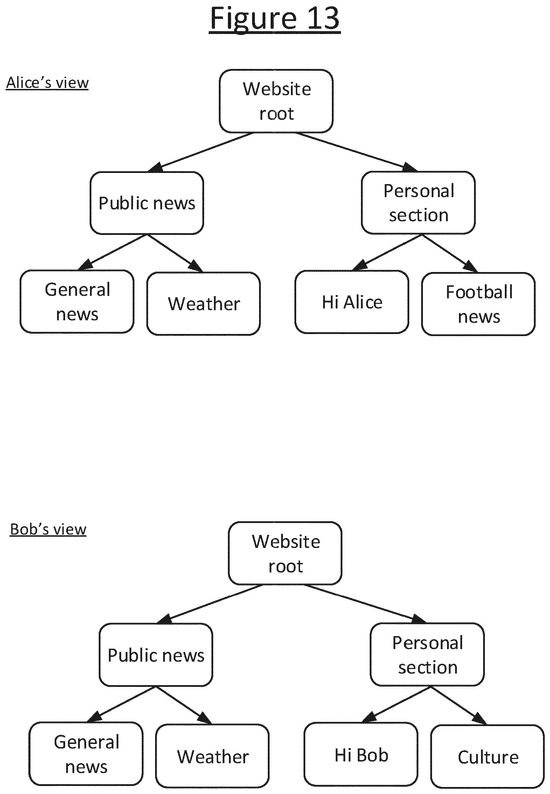

Figure 13 schematically illustrates how the disclosed embodiments may be used to create two versions of the same website.

## DETAILED DESCRIPTION OF EMBODIMENTS

### EXAMPLE SYSTEM OVERVIEW

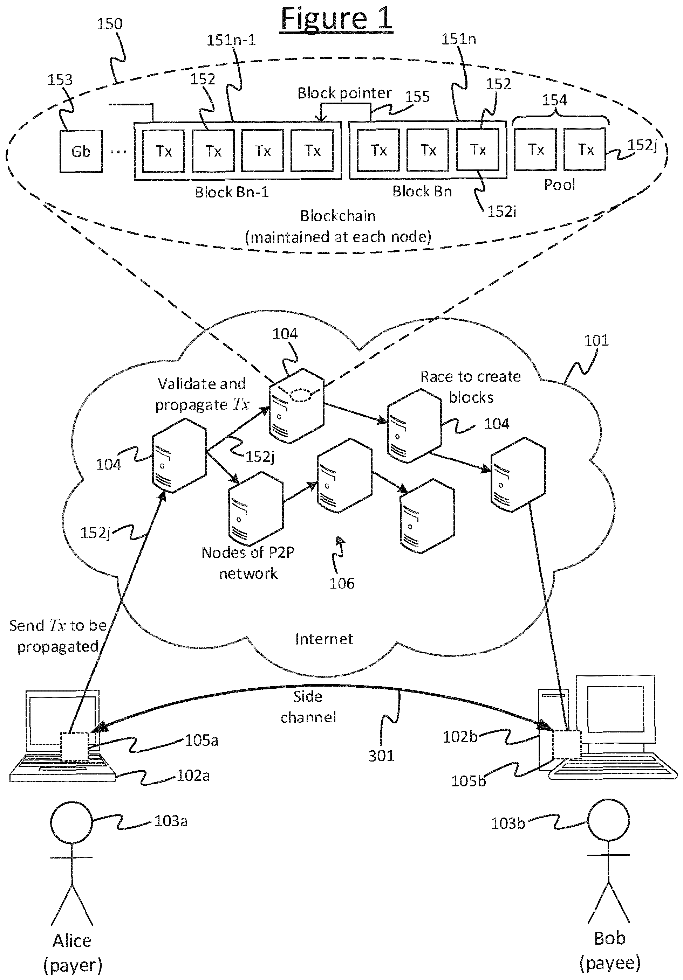

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

## UTXO-BASED MODEL

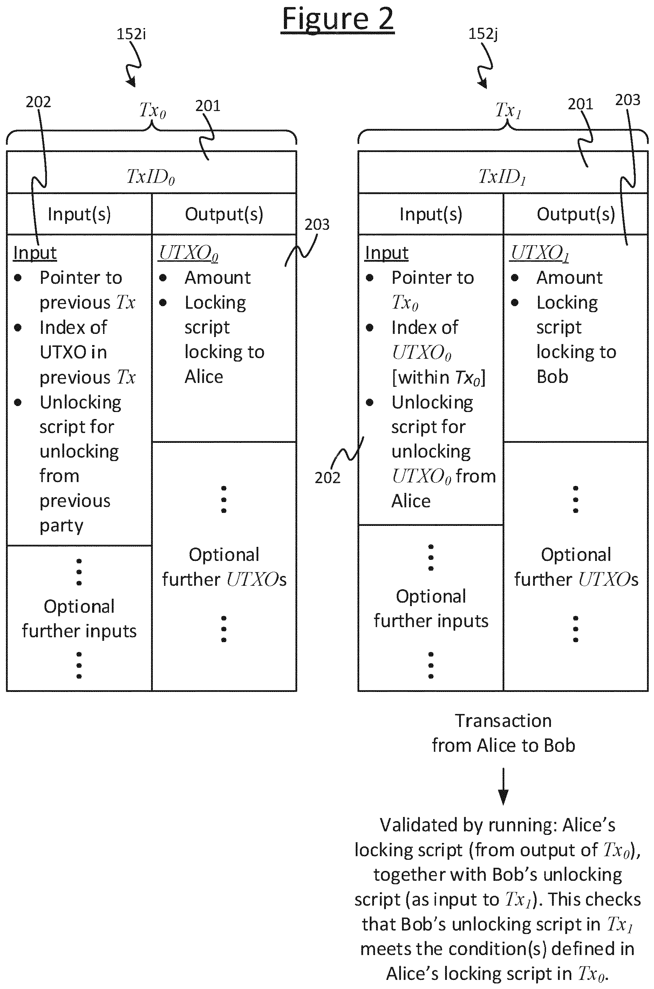

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is

the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

$$\text{<Sig } P_A\text{> <}P_A\text{> } || \text{ [Checksig } P_A\text{]}$$

where "$||$" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered pool of pending transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node 104 that successfully includes her transaction 104 in a block 151. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_2$, and $Tx_1$ has only one output $UTXO_1$. If the amount of the digital asset specified in $UTXO_0$ is greater than the amount specified in $UTXO_1$, then the difference may be assigned by the node 104 that wins the proof-of-work race to create the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

## LAYER-2 OVERLAY NETWORK

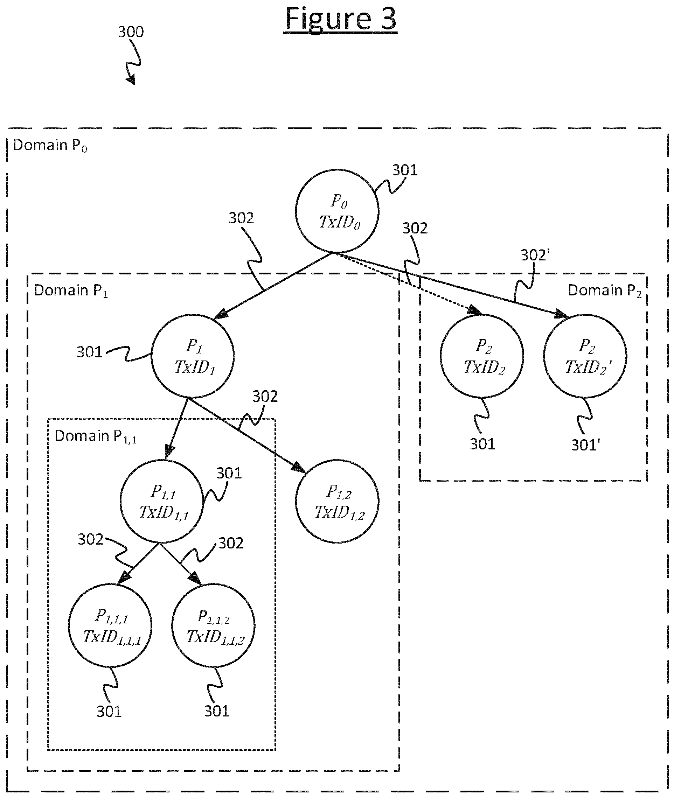

A blockchain network 106 is already a form of overlay network overlaid on a network such as the Internet 101. However, it is also possible to layer another layer of overlay network on top of a blockchain. This is illustrated by way of example in Figure 3. An example is the Metanet. Such a network could also be referred to as a "layer-2" network, in the sense that it is a second layer of overlay network relative to a base network 101 (e.g. Internet) as the underlying network infrastructure and the blockchain network 106 as the first layer of overlay network overlaid on the base network.

This second tier of overlay network 300 comprises a network of nodes 301 and edges 302. Note that a node 301 now refers to a node at the layer of the Metanet (or other such network overlaid on the blockchain), not a node 104 at the layer of the blockchain network 106 as discussed previously in relation to Figures 1 and 2. Each node 301 of the Metanet network (or the like) is a different respective transaction 152 on the blockchain 150, each of which stores data in a payload of the respective transaction. Hence a node 301 of the Metanet network 300 (or the like) may also be referred to herein as a data-storage node or data-storage transaction. The data stored therein may comprise data content and/or metadata, typically both. In an output-based model it may be stored in an unspendable output 203 of the respective transaction or even a spendable output of the respective transaction. The output may be made unspendable by means of one or more opcodes in the locking script that terminate the script when run. E.g. in a system that employs the Script language, this may be the OP_RETURN opcode, or OP_FALSE followed by OP_RETURN, depending on the protocol being used. However this is not limiting and the person skilled in the art will be aware of other techniques for storing any arbitrary payload data in a transaction in other blockchain systems, e.g. in a system employing an account-based model. The following may be exemplified in terms of an output-based model, but this is not limiting.

Note that the layer-2 overlay network 300 may consist purely of data, being entirely virtual. I.e. the nodes 301 and edges 302 of the Metanet or such like, as an overlay network overlaid on the transactions 152 of the blockchain 150, do not necessarily correspond to any particular physical actors or entities of the underlying blockchain network 106 or underlying network infrastructure 101.

The data content is the actual data the Metanet (or the like) is being used to store, e.g. text, audio, still or moving images, or other documents. It may also be referred to as user content or user data. The metadata implements the protocol for layering the network on top of the blockchain 150. In at least some of the transactions 152 it defines links between the data content. These may also be described as edges 302 between the nodes 301. The link or pointer may for example comprise the transaction ID, $TxID_{parent}$, of the parent node. Note that a "link" as referred to herein does not necessarily imply a hypertext link, though that is one possibility. More generally a link could refer to any form of pointer pointing to another node 301 to which the current node 301 is related at the Metanet layer (or other such overlay layer layered on top of the blockchain 150).

For convenience the following will be described by way of example in terms of the Metanet, but it will be appreciated that this is not limiting and more generally, anywhere herein where reference is made to the Metanet, this may be replaced with any overlay network overlaid on a blockchain. Similarly any reference to a Metanet node may be replaced with reference to any overlay network node, or data-storage node of the overlay network, and any reference to a Metanet link or edge may be replaced with reference to any overlay network edge or link at the layer of the overlay network in question.

The Metanet protocol defines a scheme and standard for structuring on-chain data that can be stored on a public blockchain and used in various applications for many use cases. The protocol specifies that graph structures, comprising nodes and edges, can be constructed from sets of blockchain transactions, and that these structures may be used to store, convey, represent and distribute data ('content') of any nature. By treating transactions as nodes, and signatures as edges created between transactions, the Metanet protocol allows for the creation of on-chain graph structures as shown in Figure 3.

As can be seen, the nodes 301 and edges 302 of the Metanet 300 form a tree structure. I.e. a parent node 301 is linked to one or more child nodes 301, and any given child 301 may itself be a parent linked to one or more children of its own, and so forth. Note that the tree structure in question for the present purposes may only be a subset of a wider tree or graph.

Figure 3 also illustrates how a node 301 and its associated edge 302 may be updated. Since transactions are recorded immutably on the blockchain 152, an update to a Metanet node 301 requires creating a new instance 301' and corresponding edge 302' by means of a new transaction 152.

The structure of Figure 3 may comprise nested domains, e.g. the structure of a website and its pages, where a 'top level domain' encapsulates the sub domains below it, and so on. One functional key domain (e.g. the domain of the writing keys, funding keys or encryption keys) can span many of these structure domains.

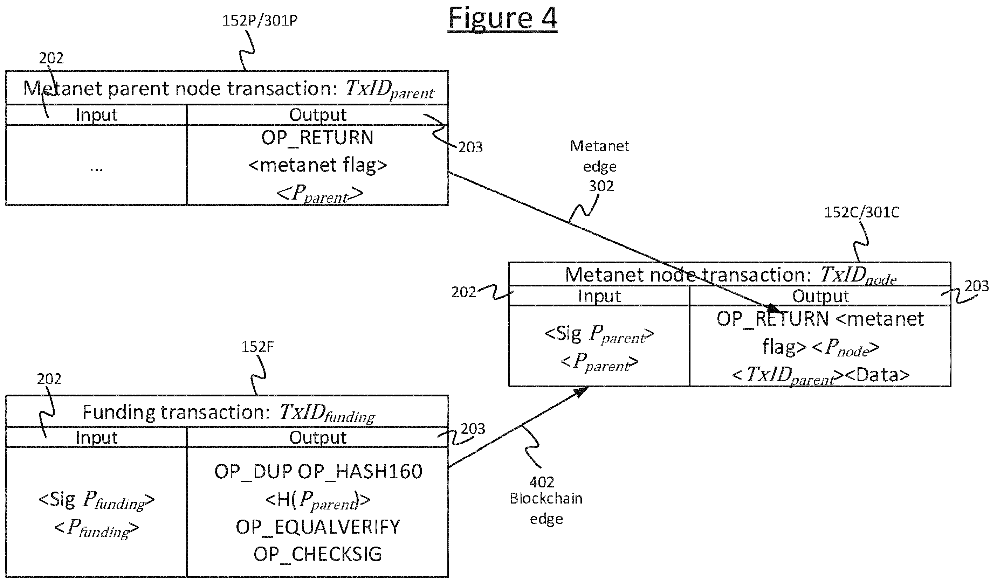

The circles in Figure 3 represent nodes, which are simply transactions that are created according to the rule set of Metanet protocol. An example of a transaction 152N that is created and formatted according that rule set is shown in Figure 4.

The transaction 152C on the right-hand side of Figure 4 represents a transaction 152 of the blockchain 150 implementing a given node 301C (a child) of the Metanet. The transaction 152P in the top-left of Figure 4 represents a transaction of the blockchain 150 which implements a parent of the child node 152C at the Metanet layer. The child node transaction 152C has an input 202 which comprises an unlocking script, and which points to the output 203 of a funding transaction 152F of the blockchain 150. In other words the output of the funding transaction 152F is consumed by the input of the Metanet node 152C. Note that the funding transaction 152F and the Metanet parent transaction 152P are not necessarily the same transaction (though that is not excluded either).

The child transaction 152C includes an unspendable output 203, e.g. made unspendable by an OP_RETURN, which holds a payload (a payload from the perspective of the blockchain layer). This payload may comprise data content ("Data") of the Metanet, which be hashed and/or encrypted, or may be simply be the raw data ("in the clear").

The payload of the child transaction 152C also comprises metadata of the Metanet network layer. This metadata comprises at least the transaction identifier of the parent transaction 152P. This creates a link (edge) 302 at the Metanet layer. It may also be required by the Metanet protocol to include a key $P_{node}$ associated with the child node 301C.

The locking script of the output 203 of the funding transaction 152F also requires a signature to be included in the unlocking script in the input 202 of the child node 152C. Specifically, this signature is required to be a signature signed using a key $P_{parent}$ associated with the Metanet parent (i.e. a message signed by that key). This creates an edge 402 (sometimes called a spending edge) at the blockchain layer. If the required signature is not included in the unlocking script in the input 202 of the child transaction 152C, then the child transaction 152C will not be validated by the nodes 104 of the blockchain network 106, and hence will not be propagated through the blockchain network 106 nor recorded on the blockchain 150. Note again however that the funding transaction 152F is not necessarily the same blockchain transaction 152 as the Metanet parent transaction 152P, and hence the blockchain layer spending edge 402 is not necessarily the same as the Metanet layer edge 302.

Figure 4 outlines only certain relevant components of a Metanet transaction as an abstraction of the transaction in its entirety. These components, in addition to a protocol identifier flag, include:

- A public key $P_{node}$;
- A signature $SigP_{parent}$ of a parent public key $P_{Parent}$;
- The transaction ID $TxID_{node}$ of the node itself; and
- The transaction ID $TxID_{Parent}$ of the parent of the node.

The placeholder *<Data>* refers generally to any content data that may be included in the Metanet node transaction. It is also possible in some applications that one would want to encrypt the data with an encryption key *ek,* in which case the data included in the transaction is cast as *< e(Data, ek) >*, where *e( )* is a suitable encryption function.

Each Metanet node 301 can be uniquely identified by the pair ($P_{node}, TxID_{node}$), which is an index that allows for powerful versioning and permissioning control to be inherited by Metanet graphs. It should also be appreciated that each Metanet node contains enough information to identify itself ($P_{node}, TxID_{node}$) and its parent ($P_{parent}, TxID_{parent}$).

In order to ensure that a Metanet child node 301C transaction contains the correct input signature $SigP_{parent}$ from a parent node 301P, it may be desirable in many cases to create one or more funding transactions 152F to facilitate this, which is shown in the bottom-left of Figure 4.

The parent key $P_{parent}$ and/or child node key $P_{node}$ can be seen as a writing key that authorises writing the data of the child node 301C to the blockchain 150.

The Metanet thus provides a protocol that allows for on-chain data to be structured in such a way that encodes the permissioning and write-access controls for such data using only the underlying technology of the blockchain itself. The Metanet protocol is therefore a solution that allows users to provably own their on-chain content.

The Metanet protocol defines a set of rules that allows creation of a Metanet Direct Acyclic Graph (Metanet DAG). A single instance of a Metanet DAG is called a Metanet tree. Each Metanet tree has a root node (the top-level node), each Metanet node, including the root node, can have one or more child nodes (e.g. see again Figure 3).

As such, the Metanet DAG becomes the global collection of trees, where each tree starts from its own root node and can have its own localised permissioning structure.

A Metanet node 301 is simply a transaction that follows the rule set of the Metanet protocol. There are two types of nodes: root nodes, which have no parent; and child nodes, wherein a given child node has exactly one parent. According to one implementation, the most basic outline structure of a Metanet node requires a transaction to meet the following criteria:

- The transaction has at least one *OP_RETURN* output (or more generally, an unspendable output).
- The *OP_RETURN* payload includes:

- ○ the Metanet flag.
- ○ a node address $P_{node}$.
- ○ a parent transaction ID $TxID_{parent}$.

- Each transaction, except the root nodes, contains an input signed by a parent node.

It is also not excluded that the same data may be included in a spendable output, e.g. using OP_PUSHDATA.

As mentioned, a Metanet node is a transaction 152 comprising four elements:

- $P_{node}$ - the address of the node.
- $TxID_{node}$ - the version of a node.
- $P_{parent}$ - the address of the parent of the node.
- $TxID_{parent}$ - the version of the parent of the node.

Metanet edges 302 are created by signatures. In order to create an edge from a parent node to a child node, the child node must be signed using the key pair associated with its parent, $SigP_{parent}$ must appear in the input of the child node.

Note that in some examples a Metanet transaction may comprise an address based on the public key $P_{node}$ (e.g. a hash of the public key), rather than the public key $P_{node}$ itself.

Also note that the transaction ID $TxID_{node}$ of the node may be interpreted as the version of the node. Similarly, the transaction ID $TxID_{Parent}$ of the parent of the node may be interpreted as the version of the parent node. Node versioning is discussed below.

A Metanet node cannot be disconnected from a tree because, as shown in Figure 4, the link between a parent and a child is created statically by publishing a transaction with the transaction ID of the parent in the 'body' (i.e. output) of the child. The node (transaction) is then signed using the parent private key. A Metanet node can therefore be excluded from the tree only by creating a new version of the same node or by invalidating it (a user still needs to retrieve it in order to check if it is valid or not).

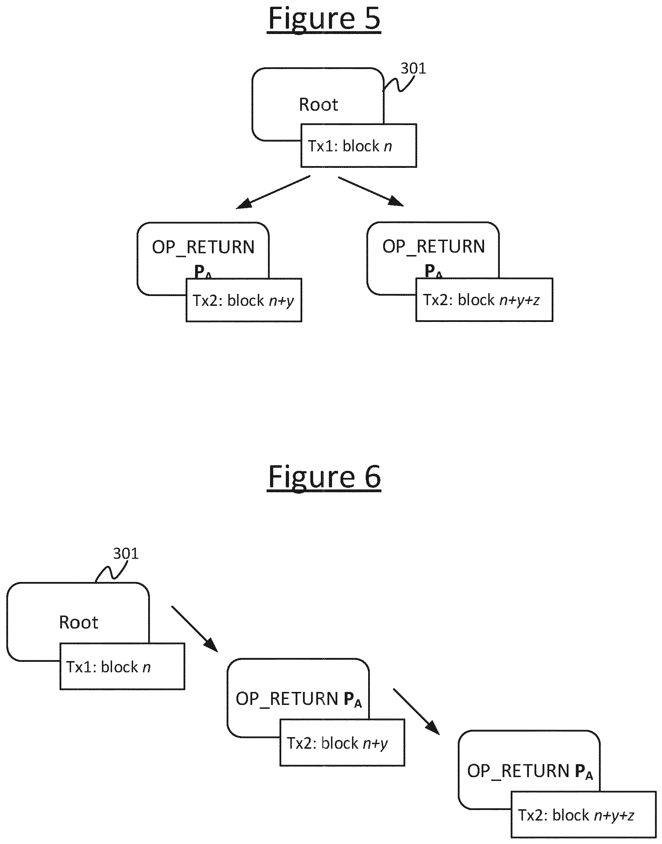

The transaction ID $TxIDnode$, is interpreted as the version of the node. If there are two nodes with the same public key (as shown in Figure 5), then the node with the transaction ID with greatest proof of work (the one inserted in the newest block) is interpreted as the latest version of that node.

A node can be deleted, or rather it can be invalidated, by generating a new transaction (not necessarily a Metanet transaction) that spends a specific UTXO included in the node to be deleted. A node with a spent UTXO is considered invalid by the protocol and, therefore, removed from the tree.

## CREATING VERSIONS OF A TREE STRUCTURE

The following describes a method by which the Metanet - or other such graph structure overlaid on a blockchain - can be used to create dynamic tree structures, i.e. different versions of the same tree. This method is sometimes referred to below as the Metanet Flux protocol (MFP), however it should be appreciated that this is merely a convenient label and applies to both the Metanet and other types of tree structures. A tree created according to the Metanet Flux protocol will be referred to as Metanet Flux tree.

In some embodiments, MFP can be used to create a Metanet Flux tree structure where certain nodes of the tree are deemed to be valid whilst others are deemed to be invalid (e.g. depending on the day on which the tree is accessed, or who is accessing the tree). Importantly, nodes can be deemed invalid without having to spend the associated UTXO, thus reducing the number of transactions submitted to the blockchain. Further features and advantages are discussed below.

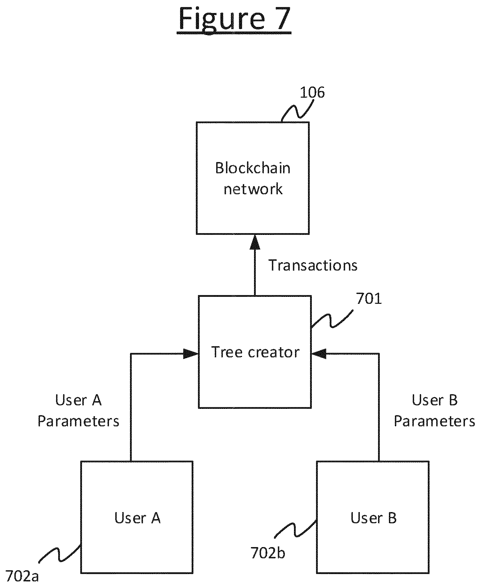

Figure 7 illustrates an example system 700 for implementing the embodiments described herein. The system 700 comprises a tree creator 701 configured to create a Metanet Flux tree. The tree creator 701 may in general be any type of party (e.g. an individual, a group of individuals, a company, etc.) or an automated entity such as a machine or smart contract. The tree creator 701 may be configured to perform some or all of the operations attributed to Alice 103a and/or Bob 103b with reference to Figures 1 and 2. For instance, the tree creator 701 is configured to generate blockchain transactions and submit those transactions to the blockchain network 106 and/or send those blockchain transactions to another party. The system 700 further comprises one or more nodes of the blockchain network 106. Also shown as being part of the system 700 are one or more users 702. Two users (User A and User B) are shown in Figure 7 but it will be appreciated that the system 700 may comprise any number of users 702. Like the tree creator 701, each user 702 may be configured to perform any of the operations performed by Alice 103a and/or Bob 103b. However this is not necessary in some examples. In general, each user 702 need only be configured to access the blockchain 150, e.g. via a blockchain node 104. In some examples, each user 702 may also be configured to communicate with the tree creator 701, e.g. to transmit parameters to the tree creator 701. Communication may be over any wired or wireless connection.

The tree creator 701 and each user 702 may operate respective computer equipment (not shown in Figure 7). The respective computer equipment of each party comprises respective processing apparatus comprising one or more processors, e.g. one or more CPUs, GPUs, other accelerator processors, application specific processors, and/or FPGAs. The respective computer equipment further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the respective computer equipment stores software comprising a respective instance of at least one respective client application arranged to run on the processing apparatus. It will be understood that any action attributed herein to the tree creator 701 or to a user 702 may be performed using the software run on the processing apparatus of the respective computer equipment. The respective computer equipment comprises at least one user terminal, e.g. a desktop or laptop computer, a tablet, a smartphone, or a wearable device such as a smartwatch. The respective computer equipment may also comprise one or more other networked resources, such as cloud computing resources accessed via the user terminal. The respective client application may be initially provided to the respective computer equipment on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

Examples of tree structures (e.g. Metanet trees) overlaid on the blockchain 150 have been described above with reference to Figures 3 to 6. Tree structures created according to embodiments of the present invention differ from those described above at least in the way in which edges connection child nodes to parent nodes may be created. That is, the following embodiments describe a novel way of forming edges between child nodes and parent nodes. In some examples, each child node of a tree structure may be formed using this novel method. In other examples, only some child nodes of the tree structure are formed using this novel method.

The tree creator 701 has access to at least part of a tree structure. The tree structure may comprise only the root node, or the root node and one or more child nodes, e.g. direct child nodes of the root node, or one or more child nodes of the root node and one or more child nodes of those child nodes, etc. As mentioned above, each child node is a blockchain transaction and therefore comprises a transaction identifier, e.g. a (double-) hash of the transaction content. Each child node also comprises (e.g. in an input of the transaction) a signature corresponding to a public key associated with the parent node to which that child node is connected. A signature corresponds to a public key if the signature can be validated using that public key.

At some point in time, the tree creator 701 creates one or multiple new child nodes. These new child nodes are children of (i.e. connected to) the same parent node. The parent node may be the root node, or a different node of the tree. The new child node(s) and the parent node to which those nodes are connected are referred to hereinafter as target child nodes and a target parent node, respectively. Each target child node comprises a respective data payload, e.g. in an output of the transaction.

The tree creator 701 also forms a respective edge between each target child node and the target parent node. Previous tree structures form an edge by including, in an output of the transaction, a transaction identifier of the parent node. In contrast, an edge between a target child node and the target parent node is formed by associating the target child node with a respective link identifier (ID). The link ID may be associated with a target child node by being included in an output of the corresponding transaction. The output may be a spendable output or an unspendable output. Data (e.g. the link ID) may be included in an unspendable output using, for instance, OP_PUSHDATA. Data may be included in a spendable output using, for instance, OP_RETURN or OP_FALSE OP_RETURN. Any other equivalent method may be used. It is not excluded that the link ID may be associated with a target child node in a different way, e.g. by being including in an input of the corresponding transaction.

In some examples, at least two target child nodes are associated with (e.g. comprise) a different link ID. Thus, at a minimum, two different versions (i.e. views) of the tree are created in these examples.

In some examples, each target child node may be associated with a different link ID. E.g. if the target parent node has three target child nodes, each of those three target child nodes may be associated with a different link ID. Thus three versions of the tree are created. In other examples, one or more target child nodes may be associated with the same link ID. Target nodes that are associated with the same link ID belong to (i.e. form part of) the same version of the tree.

When the tree structure is accessed, e.g. by a user 702, the user 702 can choose to access a particular version of the tree, e.g. the version having the target child node associated with a particular link ID. Note that accessing a tree comprises retrieving one or more nodes of the tree. Retrieving said nodes may comprise storing those nodes, e.g. in memory. Therefore the user 702 can choose to retrieve the version of the tree comprising the target child node associated with a particular link ID and not any other target child nodes. Any other non-target child node may still be retrieved, e.g. the target parent node, and any nodes of above the target parent node in the tree structure, tracing all the way back to the root node. Similarly, one or more target child nodes may themselves be a respective parent of one or more child nodes. Accessing a version of the tree may also comprise retrieving the child nodes of a target child node associated with a particular link ID.

A link ID may be based on any type of off-chain data. A link ID may be "based on" data by comprising that data, or in some other way. For instance, generating link IDs based on a function of off-chain data is discussed below.

As an example, a link ID may be based on time-related data, e.g. one or more of a day, a week, a month, a year, a date (e.g. 21/12/21), etc. For instance, the link ID of one target child node may be based on one month (e.g. March) whilst the link ID of another target child node may be based on a different month (e.g. April). Thus when accessing the tree, a user may choose to access only the target child node corresponding to the month in which the tree is accessed. E.g. if the present month is April, the user can choose to access only the target child node whose link ID is based on the month "April". Target child nodes associated with a link ID corresponding to a past month may be ignored (or deemed invalid) and not retrieved, thus reducing the number of nodes retrieved and stored by the user 702.

As another example, a link ID may be based on user-related data, i.e. data related to a specific user or group of users. For instance, a link ID may be based on one or more of the following: name, address, date of birth, passport number, phone number, email address, etc. The tree structure may relate to a particular application, website, service, etc. The link ID may then be based on a username of a user of said application, website, service, etc. These examples allow for target child nodes to be created for specific users, or for a specific group of users. Therefore a user can access a version of the tree comprising the target child node specific to that user. Here a target child node being specific to a user means that the link ID of that target child node is based on data related to that user. The same applies for groups of users.

In some examples, the respective link ID of each target child node may be based on the same type or types of data. For example, each link ID may be based on a username, with different usernames resulting in different link IDs. Similarly, each link ID may be based on a date, with different dates resulting in different link IDs. In other examples, one or more link IDs may be based on one type of data (e.g. name) whilst one or more link IDs are based on a different type of data (e.g. day of the week).

One or more link IDs may be generated by the tree creator 701. The tree creator 701 may then send one or more of the generated link IDs to one or more users 702. The tree creator 701 may send all of the link IDs to all users 702. For instance, seven link IDs may be created, one for each day of a particular week. The tree creator may send the link IDs to each user 702 so that each user can access a particular version of the tree on a particular day of the week. In other examples, the tree creator may send only particular link IDs to particular users, e.g. link IDs based on user A's data (e.g. username) may be sent only to user A 702a, whereas link IDs based on user B's data may be sent only to user B 702b.

Additionally or alternatively, one or more link IDs may be received from one or more users. For instance, user A 702a may create his/her own link IDs (e.g. based on his/her user-specific data) and send those to the tree creator 701. The tree creator may then form the edge between a target child node and the target parent node using a link ID received from that user 702a. The target child node may comprise data content intended for that user 702a.

As mentioned above, a link ID may be based on data in that the link ID comprises said data. Alternatively, a link ID may be based on data in that the link ID is a function of that data. I.e. the data is a parameter of a function configured to generate link IDs. The function is referred to hereinafter as a "link ID function". A link ID may be generated by inputting one or more parameters to a link ID function. An example of a link ID function is a hash function. Using a hash function is advantageous because resulting each link ID will have the same length and will appear to be randomly generated. In addition, it is extremely unlikely that two link IDs will be the same if based on different input parameters, and it is computationally infeasible to derive the input parameters based on the resulting link ID alone. Thus privacy of the input parameters (e.g. username) is maintained. Other functions may be used instead, e.g. a summation function, a concatenation function, an XOR function, etc.

In some examples, each link ID is generated by inputting one or more parameters to a link ID function. Each link ID may be generated by inputting one or more parameters to the same link ID function. Alternatively, one or more link IDs may be generated by inputting parameters to one link ID function, whereas one or more link IDs may be generated by inputting parameters to a different link ID function.

A link ID may be generated by supplying only a single parameter to a link ID function, or by supplying multiple parameters to the link ID function. The parameters supplied to the function may comprises one, some or all of: time-related parameters, user-specific parameters, and weighting parameters. Time-related parameters have been discussed above, e.g. day, week, month, date, etc. Similarly, user-specific parameters have also been discussed above, e.g. username, date of birth, email address, contact number, etc. Weighting parameters will be discussed below. Note that these are merely examples of different parameters that may be used and do not exclude the user of other types of parameters such as, for example, company-related data (e.g. company name, stock ticker symbol, etc.), geography-related data (e.g. city, country, etc.), and so on.

In these examples, a link ID may also be a function of the transaction ID of the target parent node. For instance, a link ID may be based on the transaction ID of the target parent node and a username of a user 702.

Each link ID may be based on the same set of parameters. Alternatively, some link IDs may be based on a different set of parameters compared to others.

One or more link IDs may be generated based on one or more encrypted parameters, or an encrypted version of a set of parameters. For instance, rather than supplying a username to the link ID function, an encrypted version of the username may be supplied instead. This allows a link ID to be based on sensitive data without revealing the data itself.

In some examples, the tree creator 701 may have access to one or more link ID functions. In that case, the tree creator may generate the link IDs. The link IDs may then be sent to one or more users 701. In these examples, the tree creator 701 may choose which parameters are supplied to a link ID function to generate a link ID. Alternatively, a user 702 may send a set of parameters to the tree creator 701. The tree creator 701 may then generate a link ID based on those parameters. This scenario is illustrated in Figure 7, where User A 702a provides a set of parameters and User B 702a provides a different set of parameters. The link ID function may initially be provided to the tree creator 701 from a user 702, or at least be initially decided upon by the user 702. E.g. user A could decide to use a hash function whilst user B decides to user an alternative function.

In some examples, a user 702 may generate one or more link IDs by supplying one or more respective sets of parameters to a link ID function. The user 702 may then send the link ID(s) to the tree creator 701.

In some examples, proof-of-work may be embedded in a link ID, analogous to how proof-of-work is embedded in a block 151 of the blockchain 150 by finding a block hash satisfying a target difficulty. Similar to this, proof-of-work may be embedded in a link ID by finding a pre-image that hashes to a link ID satisfying a target difficulty. That is, the set of parameters supplied to a link ID function (e.g. a hash function or an equivalent function) must result in a link ID satisfying a target difficulty. In the case of the link ID function being a hash function, the target difficulty may be specified by requiring the link ID (i.e. hash digest) to have a minimum number of leading number of zeros. The difficulty may be specified in other ways, e.g. ending in a minimum number of zeros.

To do this, one or more of the parameters input to the link ID function may remain static whilst a different nonce value is used each time to result in a different output. For example, a username, parent node transaction ID and the day may remain the same, whilst a nonce is incremented in integers starting from zero. The process of incrementing the nonce and calculating the result may be repeated until a valid link ID is found.

The required difficulty for each target child node may be the same. In other words, the proof-of-work required to add a target child node to the tree is consistent for all target child nodes. Alternatively, some target child nodes may require a different difficulty level to be satisfied. In this way, one can tell that a certain target child node required a greater amount of proof-of-work than another. Thus one can deduce that a target child node having a link ID satisfying a greater difficulty (e.g. twenty leading zeros) contains more valuable content than a target child node having a link ID satisfying a smaller difficulty (e.g. five leading zeros). Note that the value of content is not necessarily measured in monetary terms. For instance, the value may be a measure of trust in the content. E.g. a tree creator 701 that puts a large amount of proof-of-work into generating a link ID may only do so for data that the tree creator trusts and is thus worth expending proof-of-work in adding to the tree.

In some embodiments, one or more of the target child nodes are associated with, or at least intended for, a particular user 702. In other words, those target child nodes comprise a data payload to be accessed by a particular user. Each target child node may be intended for a different user 702, or more than one target child node may be intended for the same user 702. Embodiments of the present invention allows individual users to determine which target child node(s) are relevant to that user, and therefore retrieve only relevant nodes.

In some embodiments, one or more of the target child nodes may comprise data that is intended to be valid or relevant under certain conditions, e.g. valid for a certain time period, or valid to a certain user or group of users. For instance, target child nodes may comprise news content. A target child node may be added to the tree each day, wherein that target child contains that day's news. Embodiments of the present invention allows individual users to determine which target child node(s) are valid, and therefore retrieve only valid nodes.

In some embodiments, one or more of the target child nodes may comprise a respective web page, blog post, or the like. In the case of web pages, the content may be tailored for a specific user. Thus the describes techniques can be used to generate a link ID based on user-specific data, allowing that user to access only the relevant web pages. In the case of blog posts, the link ID of each blog post may be embedded with proof-of-work. Thus a blog post having a large amount of proof-of-work can be deemed as being legitimate, or at least valuable to the creator. When a user who accesses the tree can create the same link ID (e.g. by being provided with the required nonce), the user can be assured that the creator has spent time, money, and effort in creating the link ID. The data content (e.g. blog post) in the target child node can be deemed to be valuable, e.g. trustworthy.

Other types of data content contained in a target child node include, for example, media content (e.g. text, images, video, audio. etc. ), or files (e.g. documents, software, operating systems, etc.).

Having created a plurality of target child nodes, the tree creator may then create one or more child nodes of one or more of said target child nodes. Thus a target child node becomes a parent to one or more child nodes. The edge between those child nodes and the parent may be formed using the techniques described above. Alternatively, some or all of the edges may be formed using techniques used by existing protocols, e.g. the Metanet.

In some embodiments, an edge between a target child node and the target parent node may be formed by one or more additional elements, i.e. in addition to a link ID. For instance, an edge may require the target child node to be associated with (e.g. include in an input or output of the transaction) a signature corresponding to the public key associated with the target parent node.

In some embodiments, each target child node may comprise a protocol flag indicating that the edge connecting the target child node to the target parent node is formed according to the disclosed embodiments.

The following describes how a party (e.g. a user 702) can access a particular version of a tree created by the tree creator 701 according to the disclosed embodiments. The method will be described in terms of being performed by user A 702a, but it generally applies to any party. User A 702a is referred to as Alice. This may or may not be the same Alice 103a described with reference to Figure 1.

Alice 702a obtains the target parent node. The target node may be the root node of the tree, or a different node of the tree. Alice 702a may obtain the target parent node by tracing connections from the root node down to the target parent node, e.g. via one or more intermediate nodes. Alice 702a may obtain the target parent node by obtaining the respective public key associated with the parent node (referred to as the node address), and then identifying a node containing that public key. The target parent node may be obtained in alternative ways, e.g. using the transaction identifier of the target parent node.

Alice 702a also obtains one or more link IDs, e.g. by generating one or more link IDs and/or receiving one or more link IDs from the tree creator 701. Alice 702a may generate a link ID by supplying a set of parameters to a link ID function. Alice 702a may have initially sent one or more link IDs to the tree creator 701 for forming the edges between target child nodes and the target parent node or, as explained above, the tree creator 701 may generate the link IDs. As has also been discussed above, Alice 702a may have sent one or more respective sets of parameters to the tree creator 701 for generating respective link IDs.

It will be appreciated that the order in which Alice 702a obtains the target parent node and the link IDs may be reversed. In any case, having obtained the target parent node and the link IDs, Alice 702a then identifies one of more child nodes of the target parent node that are associated with a respective one of the obtained link IDs. This may comprise identifying blockchain transactions comprising a respective one of the link IDs, e.g. in an output of said transaction.

Alice 702a then creates a version of the tree structure that comprises the identified target child nodes (i.e. those connected to the target parent node via an edge formed by a respective one of the obtained link IDs). Alice's version of the tree does not comprise any target child nodes that are not associated with one of the obtained link IDs, e.g. target child nodes that are no longer valid or relate to a different user. Alice 702a may store (e.g. download to memory) the nodes forming her version of the tree.

Having obtained her version of the tree structure, Alice may utilize the data stored in the target child nodes that form part of her version. For instance, Alice 130a may use and/or store the data contains in said target child nodes. Utilizing the data will depend on the type of data stored in the target child nodes. E.g. if the data is a webpage, utilizing the data may comprise loading the webpage using a web browser. If the data is a file (e.g. a text file), utilizing the data may comprise opening the file using an application such as a word processor.

Further examples of the disclosed embodiments are now provided. These examples are described in terms of a particular protocol referred to as the Metanet Flux protocol, but it will be appreciated that they also apply to the more general examples described above.

The Metanet is a static tree-like structure where each node can create one or more children, which are permanently linked to the parent node. As described above, this link is created by inserting the ID of the parent in the child transaction. Embodiments of the present invention replace this static edge, substituting the ID of the parent node with a new unique ID, which is valid only according to given conditions (e.g., during a fixed period of time, only for selected users). This approach allows to have a dynamic Metanet structure, hereafter called Metanet Flux.

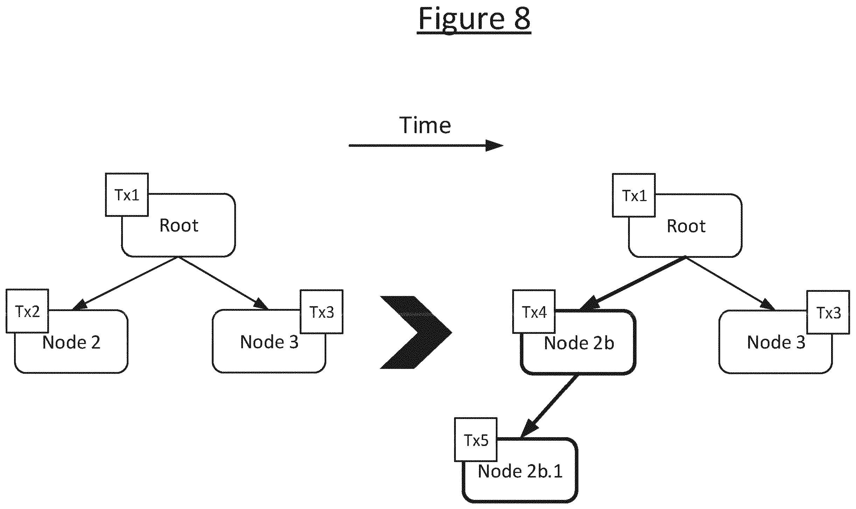

An example of this dynamic structure, at two different time frames, is shown in Figure 8. A tree is retrieved from the blockchain 150 starting from a static root node (*Tx1*). At *t=1,* the root node has two children, node 2 (*Tx2*) and node 3 (*Tx3*). The same root node, at *t=2* has a different structure: while node 3 (*Tx3*) is still present, node 2 (*Tx2*) has been replaced by node 2b (*Tx4*) which has a child node 2b.1 (*Tx5*).

The Metanet Flux allows the design of time-variant and customized trees, enabling the creation of trees with multiple-view capabilities. For example, a web site built using the Metanet Flux structure may change over time and may provide personalized content for the users.

The Metanet Flux may follow some of the same rules of a *standard* Metanet Tree, except for the edge creation. In the standard implementation, in order to create an edge from a parent node to a child node, the child node must be signed using the key pair associated with its parent, Sig $P_{parent}$ must appear in the input of the child node or in another part of that transaction (e.g., an OP_RETURN output). The child node contains a data payload (e.g. an OP_RETURN payload, or an OP_PUSHDATA payload) which includes:

- ∘ the Metanet flag.
- ∘ a node address $P_{node.}$
- ∘ a parent transaction ID $TxID_{parent.}$

In the *Flux* implementation, the signature process may be the same but the data payload may be modified as follows:

◦ the **Metanet Flux flag.**
◦ a node address $P_{node}$.
◦ a **unique ID** generated deterministically, using off-chain variables (e.g., time, name).

While the node address is the same, the other two fields are different. A specific flag is used to distinguish the Flux implementation from the standard one, and the parent transaction ID is replaced with a unique ID. This last change replaces the static edge with a dynamic one, which defines the "flux". The unique ID is deterministically generated combining one or more different parameters (the ID generation is described in detail in the following section). This way, a link can be created using parameters known only to a set of users or using time-variant information. A child linked to its parent using that off-chain information would be retrieved only if the same information can be provided when the tree is searched.

This technique has several advantages, for example it automatically invalidates old nodes, as the links with expired data (e.g., date) become invalid. Moreover, it allows the creations of multiple-view trees, where each user generate different unique IDs and thus different edges (users with same parent retrieve different children). Additionally, it can be used to embed weight or proof of work in the tree edges.

This approach is also useful for having private links: while the children of a node are public in the bitcoin network, the overlay structure (e.g., the branches) is impossible to reconstruct as the links are private (as long as the off-chain variables and/or the function used to create the ID are private).

The *link ID* is generated using an external function, provided by the Metanet Flux tree creator or the user. This function takes as input a list of parameters and generates a unique ID. The simplest way to generate this unique ID is to concatenate the parameters and then hash them. For example, a time-variant link ID could use as input parameters the parent transaction ID (like the standard Metanet implementation) and the current day:

$$\text{Link ID} = \text{hash}(\text{parent TxID} + \text{day})$$

When the day parameter changes, the link ID changes as well, and the parent node does not retrieve that children anymore. This means that each parent node retrieves a different set of children for every new day (or month, or hour).

Similarly, usernames or other identifiers can be included in the link creation:

$$\text{Link ID} = \text{hash}(\text{parent TxID} + \text{username})$$

This way different users have access to different branches and nodes. Accessing a branch or a node here means being able to recreate the link ID and therefore the edge between a parent and a child node and, ultimately, the structure of a branch. Depending on the username, a link might be valid for a user but not for another.

The link ID generation function can be more complicated than a simple hash, complex link generation would increase the difficulty for an external user to retrieve a specific branch or to associate a specific user with a specific branch. The link ID generation function must be known, or at least accessible, by the tree creator and the users who want to legitimately retrieve the tree. For example, to increase the privacy, a user can provide a link ID function and let the entity that creates the tree access it (e.g., using an API) when it needs to create a new child. Other users that do not know the function would not be able to reconstruct the link even if the parameters are known.

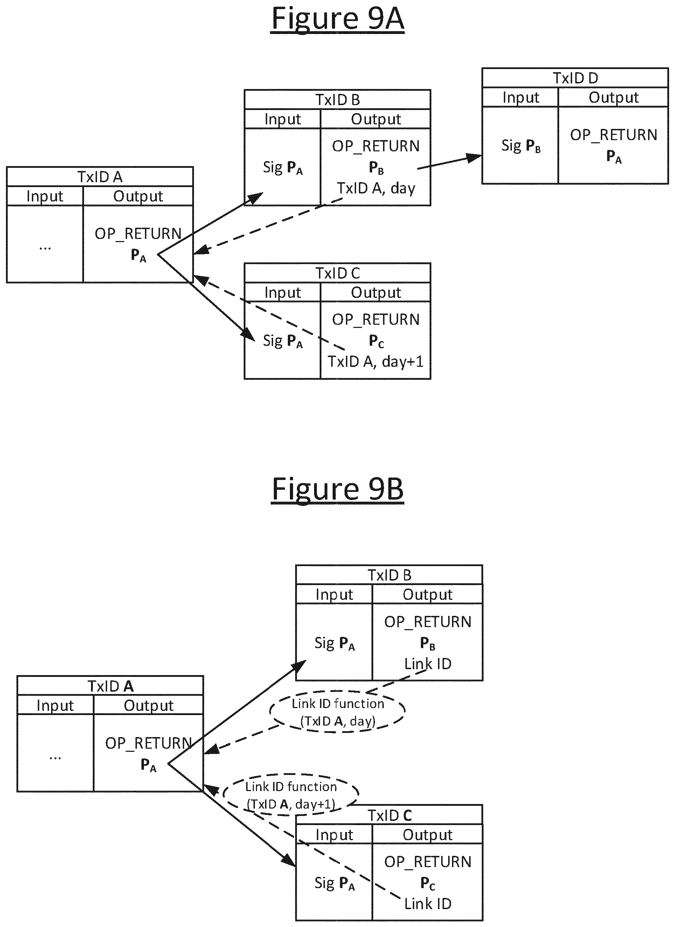

In Figures 9A and 9B is shown a comparison between the creation and removal of a native Metanet edge (Figure 9A) and a Metanet Flux edge (Figure 9B). In the example, the Metanet Flux parent node is creating new children using a time-variant link ID function. For the native Metanet, TxID_C is valid while TxID_B has been invalidated by TxID_D. For the Metanet Flux, the validit of TxID_B and TxID_C depends on the function parameters (i.e., the *day*).

Both the native and Metanet Flux implementations create a static link from the parent to a child (solid arrow, left to right). This allows a user to be able to find all the children of a given node (they are transactions starting from the parent node $P_A$).

The main difference between the two approaches is that, on one hand, the native implementation has a static link also from the child to the parent (solid arrow, right to left), creating a static and indissoluble edge. The Flux implementation, on the other hand, creates a dynamic link (dashed arrow), that is valid only given some off-chain variables. As discussed, the function of this dynamic link is to define if a node is valid or not by design, and to embed obfuscated information.

When several views need to access the same content, the content is duplicated for each user that need to access it. This leads to a waste of resources and an unnecessary growth of the tree. A way to prevent this, is to add an additional parameter (e.g., a *group*) and use it to generate the link IDs:

$$\text{Link ID} = \text{hash(parent TxID} + \text{group).}$$

Or, more in general:

$$\text{Link ID} = \text{link\_id(parent TxID, group, username, other parameters),}$$

where link_id is any appropriate function. More complicated link ID generation functions are also possible. These functions can be used to create links valid for multiple users, that is, different combinations of input parameters generate the same link ID as output. This allows to have nodes or branches active for more than user. For example, different usernames as input can, in some circumstances, generate the same link ID and, therefore, make a node active for more than one user. This allows to share content inside a group of users, avoiding unnecessary duplication of the same piece of information.

Another advantageous feature that emerges from this design is the ability to obfuscate the links: although one can always retrieve all the children of a given node, it is impossible to reconstruct the structure and infer any other information. If with the native implementation, all the nodes associated with a user can be clustered (even if the username is encrypted, the hash is the same), in the Flux implementation the username is mixed with other parameters and it is thus impossible to detect any kind of structure or infer any correlation.

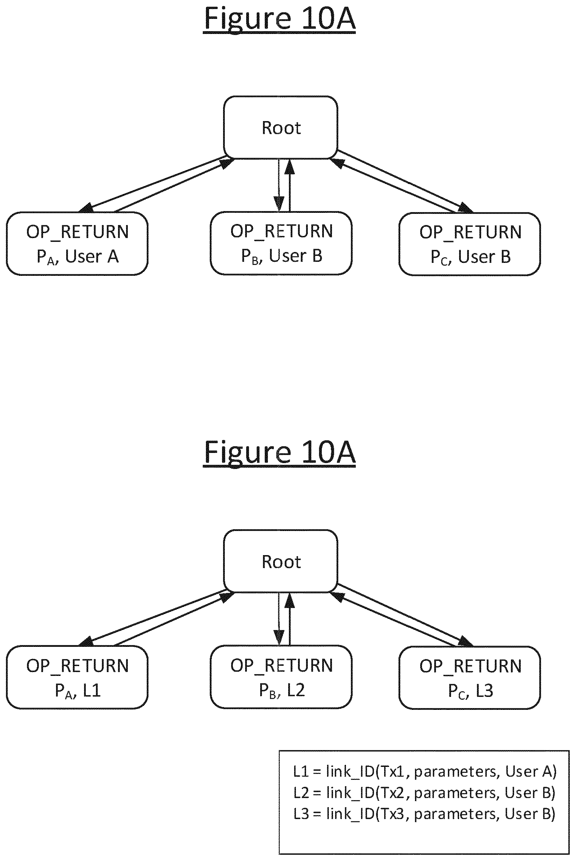

As an example, in Figure 10A, usernames are included in the nodes of a parent node. With this native Metanet implementation an attacker can monitor the tree activity and cluster all the nodes belonging to the same user. In contrast, In the Flux implementation shown in Figure 10B, the links obfuscate the data that they are carrying, increasing the privacy of the users.

Obfuscation not only applies to data embedded in the nodes (transactions), but may also be used to hide parts of the tree, thus further increasing privacy. With a standard Metanet tree, if one has access to a node ID, the parent(s) of that node can be found because the TxID of the parent node is stored in the child node. Similarly, having found the parent node, the parent of the parent node can also be found, along with any other branches of the tree. Ultimately the entire tree can be reconstructed.

However, with a Metanet Flux tree, if one has access to a node ID then it is not possible to find the parent node, because only the link ID is present in the child node and not the TxID of the parent. This means that only the children of the child node can be retrieved, and their children, and so on. This means that one can only navigate a specific branch of a tree (from the child node until the leaves), but one cannot detect higher levels and other branches. This increases the privacy aspect of the tree (e.g. the data stored in parts of the tree).

In some examples, a user 702 who wants to retrieve a Metanet Flux tree may need three pieces of information:

- the parent node ID, i.e. the public key $P_{node}$ (the root ID $P_{root}$ in case the user is accessing the entire tree, or any other node ID $P_{node}$ for accessing a subtree),
- the link ID generation function, and
- the link ID parameters (e.g., day, username, other data).

The parent node ID is used to begin the search in the blockchain 150, while the link ID generation function and the parameters are used to look for the connected children. The full retrieval process, starting from a parent node $P_{node}$, is as follows:

1. Initialize a new off-chain Metanet tree structure MT used to retrieve the tree. This can be done by any application that wants to use that structure (e.g., a browser, a library, such as a JS library).
2. Set node $P_{node}$ as root of the tree MT.
3. Collect all the transactions $P_x$ originating from $P_{node}$ published on the blockchain 150.
4. For each transaction $P_x$:

   a. Verify if it follows the Metanet Flux protocol (check the Metanet Flux flag).
   If not, discard the transaction and go back to point 4.
   b. Verify if the link ID is valid, given the link ID generation function and the off-chain parameters.
   If not, discard the transaction and go back to point 4.
   c. Add the transaction $P_x$ the Metanet structure MT, as child of the originating transaction $P_{node}$.

5. For each new node $P_x$ added to the tree MT, collect all the transactions originating from it and restart from point 4.

Some steps may be performed in a different order. Not all steps of this method are required in all circumstances. For instance, whilst the use of a protocol flag may narrow down the potential transactions that may form the tree, the protocol flag is not essential. E.g. each transaction $P_x$ may be assumed to follow the protocol.

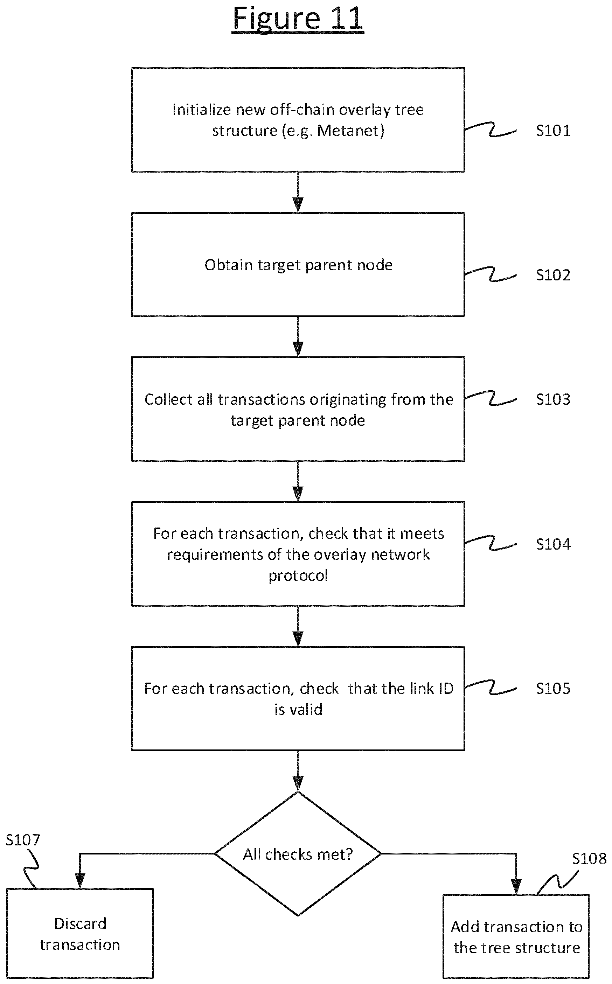

The method is illustrated schematically in Figure 11. At step S101, the user 702 initializes new off-chain overlay tree structure (e.g. Metanet). At step S102, the user 702 obtains a target parent node, e.g. from the tree creator 701. At step S103, the user 702 collect all transactions originating from the target parent node. Then at step S104, the user 702 checks that each transaction meets the requirements of the Metanet Flux protocol. At step S105, the user 702 checks that each transaction is associated (e.g. comprises) a valid link ID. E.g. the user 702 may have obtained or generated a set of link IDs. If one or more checks are not met, then the transaction that fails the check(s) is discarded at S107. If all checks are met, the transaction is added to the tree structure at step S108.

As shown in Figure 11, dynamic edges allow to select only currently valid nodes (off-chain parameter 'day=2' in the example), creating lightweight tree-structures.

## EXAMPLES USE CASES

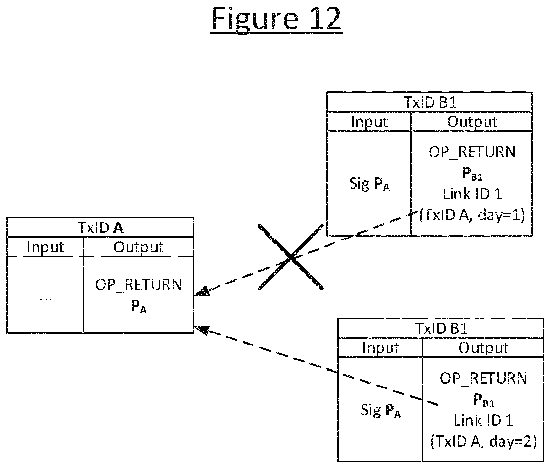

Figure 12 illustrates how the described embodiments may be used to divide a website into sections that are updated at different time intervals. For example, the structure of the website could be published with monthly validity, and the daily news could be published every day using a date parameter (e.g., "day/month/year"). The web site could show only the news of the day and offer the older news in an archive section, which is created by changing the date parameter and retrieved only from the interested readers. Similarly, web sites could be customized offering personalized experiences to logged users. A user would retrieve personalized sections of the website with custom content, as shown in Figure 12. Updates within the validity timeframe of the tree can be accomplished following the invalidation rules of the standard Metanet protocol.

The web site tree contains a lot of information, as new data is added every day or every hour, and logged users expect customised content. However, the information (i.e., the nodes retrieved by a single user) is only a fraction of the entire web site tree, and it is always lightweight and updated.

As another example, the Metanet Flux can be used to create weighted trees by adding a weight parameter to the link ID function. A simple link ID may be created as follows:

$$\text{Link ID} = \text{hash}(\text{parent TxID} + \text{weight})$$

This allows a user 702 to retrieve only nodes with a given weight or with a minimum weight: if weight can be between 0 and 5 and only nodes with weight higher or equal to 4 should be retrieved, then two link IDs are created, one using weight=4 and one using weight=5. If a child node matches one of the two link IDs then it is retrieved, otherwise it is discarded. The weight may be changed by using additional parameters (e.g., the day, the version number) such that the node weight is updated when a new version of the node (e.g., a new day begins) is published.

A weighted tree may be used for tree structures that represent a website, e.g. a blog. Higher weights may be assigned to pages or blog posts that have e.g. more "likes", more reviews, more comments, etc. As another example, the tree structure may represent a water distribution pipeline. Higher weights may be assigned to pipes in the pipeline that have a higher throughput capacity. Thus when the tree structure is used to route water to a destination, a route made up of pipes having higher weights may be chosen. As another example, a tree structure may be used for navigation purposes. E.g. a user may request a route from a starting place to a destination. Each node may represent a connection point (e.g. a point of interest, a crossroad, a roundabout, etc.). Each edge connecting two nodes represents a road between the connection points represented by those nodes. Higher weighted edges (i.e. formed by higher weighted link IDs) may represent motorways whereas lower weighted edges may represent smaller roads, lanes, etc. When computing a route to the destination, i.e. computing a route between two points (two nodes), roads (edges) with higher weighs may be chosen to reach the destination faster or to improve route computation speed.

Another application of the Metanet Flux is to create trees with proof-of-work (PoW) embedded in the edges, that is, in order to append a new node one has to generate a link ID that satisfies a predefined difficulty threshold (the equivalent of PoW for block generation). PoW incentivises honesty and prevents spam. When someone publishes a tree or a branch with a lot of PoW embedded, she/he is implicitly saying that she/he believes that the information being published is relevant (she/he is not just spamming).

The link ID generation function can be used to generate link IDs with embedded PoW. A service or a user willing to append a new node to a PoW metanet tree may be required to create a link ID that satisfies the required difficulty (e.g., a link starting with a given number of zeros). If the user fails to generate that link, the node is rejected. Alternatively, it can be added, but then not retrieved by the services accessing the tree. Like for block creation, link ID generation functions can enable PoW by embedding a *nonce,* and using it to create PoW links:

$$\text{PoW link ID} = \text{link\_id}(\textit{parameters, nonce})$$

Or similarly:

$$\text{PoW link ID} = \text{link\_id}(\text{old\_}link\_id(parameters), nonce)$$

The PoW link ID use the same methodology of the other systems that use PoW, where the *nonce* is valid if the hash produced is lower than a given threshold. Blockchain nodes 104 can offer a *nonce* search service in exchange of a reward. It is worth noting that if only parameters independent from the child node being created are used (e.g., only *parent TxID* and *username*), then once a PoW is found then it can be used to append other children to the same node. One way to prevent this is to add a parameter specific to each single child node, for example the ID of the transactions used as input (the UTXO being spent).

In some embodiments, this approach can be used by content publishers to generate links with embedded PoW. The *nonces* must be available for the users, so that they can reconstruct the edges when they are retrieving the tree.

In other applications, the valid *nonce* may be produced by the users (or by blockchain nodes 104) as a way to express willingness or effort to create a node that should added to a given branch. For example, in a blog, threads can require links with a predefined amount of PoW in order to allow publication. Different threads can have different PoW requirements. A user can publish a message (a new node) in a specific thread only if she/he is able to produce a valid *nonce* along with the content and the other variables.

It is worth noting that PoW is only used when creating a new child node, when an existing PoW tree is read no further PoW is required. The only requirement is to know the *nonce* used to generate the link.

If *nonce* and *day* are both embedded in the link ID, a content producer or user (depending on the application) has to create a new valid node every day (e.g., republish the same content every day) and, thus, produce new PoW every day. This forces the node owner to spend work only if the content is still relevant, leading to an automatic removal of useless or old information.

Here, PoW is used as a requirement to publish new content in a specific tree/branch. It is worth noting that it could also be used by the tree users as a form of filtering: one could decide to visualize or download only the trees with high PoW embedded. Similarly, these users can further reduce the tree size by filtering the more important/interesting branches, or rather the ones with more PoW embedded.

In summary, the Metanet Flux is a technique to create time-variant, customizable trees. This allows users to retrieve only the most updated and user-specific version of the tree. An advantage of this technique is to provide fast retrieval and lightweight trees, and to create different versions (views) of the same tree accessible by different users or groups (according to some off-chain parameters). Moreover, it enables the creation of weighted Metanet trees and PoW Metanet trees. Lastly, the Metanet Flux crates obfuscated edges, hiding user activity and other information. For example, a Metanet tree updated frequently could grow very fast and become slow to retrieve and process, because invalid nodes must be checked and removed by the users (e.g., user navigating a website would download a lot of outdated information). In contrast, a Metanet Flux tree will prune invalid nodes and branches by-design, improving the management efficiency and the user experience. As an example, given a root and an invalid child, using the native Metanet implementation a user should retrieve the child and then verify whether it is valid or not (e.g., checking the mempool to verify whether the UTXO has been spend or looking for children of this child). Conversely, the Flux implementation would simply not find any valid edge. Moreover, a user could find the exact number of children connected to the root (even if they are invalid), but the same user would not be able to figure out this information using the Metanet Flux.

The Metanet Flux allows the generation of time-variant trees, and allows for the generation of different and customizable versions of the same tree, using different off-chain parameters. In addition, the resulting tree structures are faster to retrieve and lighter than standard Metanet trees. The tree edges are obfuscated. It also enables the creation of weighted trees. Also, proof-of-work can be embedded in trees and branches.

**CONCLUSION**

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

**Claims**

1.  A computer-implemented method of creating different versions of a tree structure overlaid on a blockchain (150), the tree structure comprising a set of nodes and edges between nodes, wherein each node is a different transaction recorded on the blockchain (150), wherein each edge connects from a respective child node to a respective parent node, wherein one of the parent nodes is a root node of the tree structure, wherein each node is associated with a respective key, wherein each child node comprises i) a respective transaction identifier, and ii) a signature corresponding to the respective key associated with the respective parent node, and wherein the method is performed by a tree creator and comprises:

    creating one or more target child nodes of a target parent node, each target child node comprising a respective data payload; and
    forming a respective edge between each target child node and the target parent node by associating each of the target child nodes with a respective link identifier, wherein the respective link identifier is based on at least one off-chain parameter.

2.  The method of claim 1, wherein at least two of the target child nodes are associated with different respective link identifiers.

3.  The method of any preceding claim, wherein one, some or each of the respective link identifiers are generated by supplying a respective set of off-chain parameters to a respective link identifier function that is configured to generate a link identifier based on a set of parameters.

4.  The method of claim 3, wherein one, some or each of the respective link identifiers are generated by supplying a respective set of off-chain parameters to a same link identifier function.

5.  The method of claim 4, wherein at least two of the respective link identifiers are generated by supplying a respective set of off-chain parameters to a different link identifier function.

6.  The method of claim 3 or any claim dependent thereon, wherein the respective set of off-chain parameters supplied to the respective link identifier function comprises one, some or each of the following:

    - one or more time-related parameters,
    - one or more user-specific parameters,
    - one or more parameters specific to a group of users,
    - one or more weighting parameters,
    - one or more dataset-specific parameters, and
    - one or more application-specific parameters.

7.  The method of claim 6, wherein in addition to the respective set of off-chain parameters, a transaction identifier of the target parent node is also supplied to the respective link identifier function to generate the respective link identifier.

8. The method of claim 3 or any claim dependent thereon, wherein one or more of the respective set of parameters supplied to the link identifier function are encrypted.

9. The method of claim 3 or any claim dependent thereon, wherein one, some or each of the respective link identifiers are generated based on a different value of at least one same parameter.

10. The method of any preceding claim, wherein one, some or each of the target child nodes are associated with a respective user.

11. The method of claim 3 or any claim dependent thereon, comprising embedding proof-of-work into the respective edge between at least one target child node and the parent node by generating a respective link identifier satisfying a predetermined difficulty, wherein the respective link identifier is generated by supplying the respective set of parameters and a nonce value to the respective link identifier function.

12. The method of any preceding claim, comprising:

creating one or more target child nodes of a different target parent node, each target child node comprising a respective data payload; and
forming a respective edge between each target child node and the different target parent node by associating each of the target child nodes with a respective link identifier, wherein the respective link identifier is based on at least one off-chain parameter.

13. A computer-implemented method of accessing a tree structure overlaid on a blockchain, the tree structure comprising a set of nodes and edges between nodes, wherein each node is a different transaction recorded on the blockchain (150), wherein each edge connects from a respective child node to a respective parent node, wherein one of the parent nodes is a root node of the tree structure, wherein each node is associated with a respective key, wherein each child node comprises i) a respective transaction identifier, and ii) a signature corresponding to the respective key associated with the respective parent node, wherein a target parent node is connected to a plurality of target child nodes, each target child node comprising a respective data payload, wherein each of the target child nodes is associated with a respective link identifier, wherein the respective link identifier is based on at least one off-chain parameter, and wherein the method is performed by a tree accessor and comprises:

obtaining the target parent node;
obtaining one or more link identifiers;
identifying one or more of the target child nodes that are associated with a respective one of the obtained one or more link identifiers; and
creating a version of the tree structure comprising one or more of the identified target child nodes, but not those target child nodes that are not identified as being associated with a respective one of the obtained one or more link identifiers.

14. A computer system comprising:

processing apparatus comprising one or more processing units, and
memory comprising one or more memory units;
wherein the memory stores code arranged to run on the processing apparatus, the code being configured so as when run on the processing apparatus to perform operations in accordance with any preceding claim.

15. A computer program embodied on computer-readable storage, the computer program comprising code configured so as when run on one or more processing units to perform operations in accordance with any of claims 1 to 13.

**Patentansprüche**

1. Computerimplementiertes Verfahren zum Erzeugen verschiedener Versionen einer Baumstruktur, die auf eine Blockchain (150) überlagert ist, wobei die Baumstruktur einen Satz von Knoten und Kanten zwischen den Knoten umfasst, wobei jeder Knoten eine unterschiedliche Transaktion ist, die in der Blockchain (150) aufgezeichnet ist, wobei jede Kante einen jeweiligen untergeordneten Knoten mit einem jeweiligen übergeordneten Knoten verbindet, wobei einer der übergeordneten Knoten ein Wurzelknoten der Baumstruktur ist, wobei jeder Knoten mit einem jeweiligen Schlüssel assoziiert ist, wobei jeder untergeordnete Knoten i) eine jeweilige Transaktionskennung und ii) eine Signatur umfasst, die dem jeweiligen Schlüssel entspricht, der mit dem jeweiligen übergeordneten Knoten assoziiert ist, und wobei das Verfahren von einem Baumerzeuger durchgeführt wird und umfasst:

Erzeugen eines oder mehrerer untergeordneter Zielknoten von einem übergeordneten Zielknoten, wobei jeder untergeordnete Zielknoten eine jeweilige Datennutzlast umfasst; und

Bilden einer jeweiligen Kante zwischen jedem untergeordneten Zielknoten und dem übergeordneten Zielknoten, indem jeder der untergeordneten Zielknoten mit einer jeweiligen Verknüpfungskennung assoziiert wird, wobei die jeweilige Verknüpfungskennung mindestens teilweise auf einem Off-Chain-Parameter basiert ist.

2. Verfahren nach Anspruch 1, wobei mindestens zwei untergeordnete Zielknoten mit unterschiedlichen jeweiligen Verknüpfungskennungen assoziiert sind.

3. Verfahren nach einem der vorhergehenden Ansprüche, wobei eine, einige oder alle der jeweiligen Verknüpfungskennungen erzeugt werden, indem ein jeweiliger Satz von Off-Chain-Parametern für eine jeweilige Verknüpfungskennungsfunktion zur Verfügung gestellt wird, die konfiguriert ist, um basierend auf einem Satz von Parametern eine Verknüpfungskennung zu erzeugen.

4. Verfahren nach Anspruch 3, wobei eine, einige oder alle der jeweiligen Verknüpfungskennungen erzeugt werden, indem ein jeweiliger Satz von Off-Chain-Parametern für eine gleiche Verknüpfungskennungsfunktion zur Verfügung gestellt wird.

5. Verfahren nach Anspruch 4, wobei mindestens zwei der jeweiligen Verknüpfungskennungen erzeugt werden, indem ein jeweiliger Satz von Off-Chain-Parametern für eine unterschiedliche Verknüpfungskennungsfunktion zur Verfügung gestellt wird.

6. Verfahren nach Anspruch 3 oder jedem Anspruch, der von diesem abhängig ist, wobei der jeweilige Satz von Off- Chain-Parametern, der für die jeweilige Verknüpfungskennungsfunktion zur Verfügung gestellt wird, einen, einige oder alle der folgenden Parameter umfasst:

- einen oder mehrere zeitbezogene Parameter,
- einen oder mehrere benutzerspezifische Parameter,
- einen oder mehrere Parameter, die spezifisch für eine Gruppe von Benutzern sind,
- einen oder mehrere Gewichtungsparameter,
- einen oder mehrere datensatzspezifische Parameter, und
- einen oder mehrere anwendungsspezifische Parameter.

7. Verfahren nach Anspruch 6, wobei zusätzlich zu dem jeweiligen Satz von Off-Chain-Parametern auch eine Transaktionskennung des übergeordneten Zielknotens für die jeweilige Verknüpfungskennungsfunktion zur Verfügung gestellt wird, um die jeweilige Verknüpfungskennung zu erzeugen.

8. Verfahren nach Anspruch 3 oder jedem Anspruch, der von diesem abhängig ist, wobei einer oder mehrere des entsprechenden Satzes von Parametern, die der jeweiligen Verknüpfungskennungsfunktion zur Verfügung gestellt wird, verschlüsselt werden.

9. Verfahren nach Anspruch 3 oder jedem Anspruch, der von diesem abhängig ist, wobei eine, einige oder alle der jeweiligen Verknüpfungskennungen basierend auf einem unterschiedlichen Wert von mindestens einem gleichen Parameter erzeugt werden.

10. Verfahren nach einem der vorhergehenden Ansprüche, wobei einer, einige oder alle der untergeordneten Zielknoten mit einem jeweiligen Benutzer assoziiert sind.

11. Verfahren nach Anspruch 3 oder jedem Anspruch, der von diesem abhängig ist, das ein Einbetten eines Arbeitsnachweises in die jeweilige Kante zwischen mindestens einem untergeordneten Zielknoten und dem übergeordneten Knoten umfasst, indem eine jeweilige Verknüpfungskennung erzeugt wird, die eine vorbestimmte Schwierigkeit erfüllt, wobei die jeweilige Verknüpfungskennung erzeugt wird, indem der jeweilige Satz von Parametern und ein Nonce-Wert für die jeweilige Verknüpfungskennungsfunktion zur Verfügung gestellt werden.

**12.** Verfahren nach einem der vorhergehenden Ansprüche, umfassend:

Erzeugen eines oder mehrerer untergeordneter Zielknoten und eines unterschiedlichen übergeordneten Zielknotens,
wobei jeder untergeordnete Zielknoten eine jeweilige Datennutzlast umfasst; und
Bilden einer jeweiligen Kante zwischen jedem untergeordneter Zielknoten und dem unterschiedlichen übergeordneten Zielknoten, indem jeder der untergeordneten Zielknoten mit einer jeweiligen Verknüpfungskennung assoziiert wird, wobei die jeweilige Verknüpfungskennung mindestens teilweise auf einem Off-Chain-Parameter basiert ist.

**13.** Computerimplementiertes Verfahren zum Zugreifen auf eine Baumstruktur, die auf eine Blockchain überlagert ist, wobei die Baumstruktur einen Satz von Knoten und Kanten zwischen den Knoten umfasst, wobei jeder Knoten eine unterschiedliche Transaktion ist, die in der Blockchain (150) aufgezeichnet ist, wobei jede Kante einen jeweiligen untergeordneten Knoten mit einem jeweiligen übergeordneten Knoten verbindet, wobei einer der übergeordneten Knoten ein Wurzelknoten der Baumstruktur ist, wobei jeder Knoten mit einem jeweiligen Schlüssel assoziiert ist, wobei jeder untergeordnete Knoten i) eine jeweilige Transaktionskennung und ii) eine Signatur umfasst, die dem jeweiligen Schlüssel entspricht, der mit dem jeweiligen übergeordneten Knoten assoziiert ist, wobei ein übergeordneter Zielknoten mit einer Vielzahl von untergeordneten Zielknoten verbunden ist, wobei jeder untergeordnete Zielknoten eine jeweilige Datennutzlast umfasst, wobei jeder untergeordnete Zielknoten mit einer jeweiligen Verknüpfungskennung assoziiert ist, wobei die jeweilige Verknüpfungskennung auf mindestens einem Off-Chain-Parameter basiert ist und wobei das Verfahren von einer Baumzugriffsfunktion durchgeführt wird und umfasst:

Erhalten des übergeordneten Zielknotens;
Erhalten einer oder mehrerer Verknüpfungskennungen;
Identifizieren eines oder mehrerer der untergeordneten Zielknoten, die mit einer jeweiligen der erhaltenen einen oder mehreren Verknüpfungskennungen assoziiert sind; und
Erzeugen einer Version der Baumstruktur, die einen oder mehrere der identifizierten untergeordneten Zielknoten umfasst, aber nicht jene untergeordneten Zielknoten, die nicht so identifiziert wurden, dass sie mit einer jeweiligen der erhaltenen einen oder mehreren Verknüpfungskennungen assoziiert sind.

**14.** Computersystem, umfassend:

eine Verarbeitungsvorrichtung, die eine oder mehrere Verarbeitungseinheiten umfasst, und
einen Speicher, der eine oder mehrere Speichereinheiten umfasst;
wobei in dem Speicher ein Code gespeichert ist, der geeignet ist, um in der Verarbeitungsvorrichtung ausgeführt zu werden, wobei der Code konfiguriert ist, um, wenn er in der Verarbeitungsvorrichtung ausgeführt wird, die Operationen des Verfahrens nach einem der vorhergehenden Ansprüche durchzuführen.

**15.** Computerprogramm, das in einem computerlesbaren Speicher konkretisiert ist, wobei das Computerprogramm einen Code umfasst, der konfiguriert ist, um wenn er in der einen oder den mehreren Verarbeitungseinheiten ausgeführt wird, die Operationen des Verfahrens nach einem der Ansprüche 1 bis 13 durchzuführen.

**Revendications**

**1.** Procédé mis en œuvre par ordinateur pour créer différentes versions d'une structure arborescente superposée sur une chaîne de blocs (150), la structure arborescente comprenant un ensemble de nœuds et d'arêtes entre les nœuds, chaque nœud étant une transaction différente enregistrée sur la chaîne de blocs (150), chaque arête connectant un nœud enfant respectif à un nœud parent respectif, l'un des nœuds parents étant un nœud racine de la structure arborescente, chaque nœud étant associé à une clé respective, chaque nœud enfant comprenant i) un identifiant de transaction respectif, et ii) une signature correspondant à la clé respective associée au nœud parent respectif, et le procédé étant exécuté par un créateur d'arbre et comprenant :

la création d'un ou plusieurs nœuds enfants cibles d'un nœud parent cible, chaque nœud enfant cible comprenant une charge utile de données respective ; et
la formation d'une arête respective entre chaque nœud enfant cible et le nœud parent cible en associant chacun des nœuds enfants cibles à un identifiant de liaison respectif, l'identifiant de liaison respectif étant basé sur au moins un paramètre hors-chaîne.

2. Procédé selon la revendication 1, dans lequel au moins deux des nœuds enfants cibles sont associés à des identifiants de liaison respectifs différents.

3. Procédé selon l'une quelconque des revendications précédentes, dans lequel un, certains ou chacun des identifiants de liaison respectifs sont générés par envoi d'un ensemble respectif de paramètres hors-chaîne à une fonction d'identifiant de liaison respective qui est configurée pour générer un identifiant de liaison sur la base d'un ensemble de paramètres.

4. Procédé selon la revendication 3, dans lequel un, certains ou chacun des identifiants de liaison respectifs sont générés par envoi d'un ensemble respectif de paramètres hors-chaîne à une même fonction d'identifiant de liaison.

5. Procédé selon la revendication 4, dans lequel au moins deux des identifiants de liaison respectifs sont générés par envoi d'un ensemble respectif de paramètres hors-chaîne à une fonction d'identifiant de liaison différente.

6. Procédé selon la revendication 3 ou selon toute revendication dépendant de celle-ci, dans lequel l'ensemble respectif de paramètres hors-chaîne envoyé à la fonction d'identifiant de liaison respective comprend un, certains ou chacun des paramètres suivants :

   - un ou plusieurs paramètres temporels,
   - un ou plusieurs paramètres spécifiques de l'utilisateur,
   - un ou plusieurs paramètres spécifiques d'un groupe d'utilisateurs,
   - un ou plusieurs paramètres de pondération,
   - un ou plusieurs paramètres spécifiques de l'ensemble de données, et
   - un ou plusieurs paramètres spécifiques de l'application.

7. Procédé selon la revendication 6, dans lequel, en plus de l'ensemble respectif de paramètres hors-chaîne, un identifiant de transaction du nœud parent cible est également envoyé à la fonction d'identifiant de liaison respective pour générer l'identifiant de liaison respectif.

8. Procédé selon la revendication 3 ou selon toute revendication dépendant de celle-ci, dans lequel un ou plusieurs paramètres de l'ensemble respectif de paramètres envoyé à la fonction d'identifiant de liaison respective sont chiffrés.

9. Procédé selon la revendication 3 ou selon toute revendication dépendant de celle-ci, dans lequel un, certains ou chacun des identifiants de liaison respectifs sont générés sur la base d'une valeur différente d'au moins un même paramètre.

10. Procédé selon l'une quelconque des revendications précédentes, dans lequel un, certains ou chacun des nœuds enfants cibles sont associés à un utilisateur respectif.

11. Procédé selon la revendication 3 ou selon toute revendication dépendant de celle-ci, comprenant l'intégration d'une preuve de travail dans l'arête respective entre au moins un nœud enfant cible et le nœud parent en générant un identifiant de lien respectif satisfaisant une difficulté prédéterminée, l'identifiant de liaison respectif étant généré par envoi de l'ensemble respectif de paramètres et d'une valeur aléatoire à la fonction d'identifiant de liaison respective.

12. Procédé selon l'une quelconque des revendications précédentes, comprenant :

   la création d'un ou plusieurs nœuds enfants cibles d'un nœud parent cible différent, chaque nœud enfant cible comprenant une charge utile de données respective ; et
   la formation d'une arête respective entre chaque nœud enfant cible et le nœud parent cible différent en associant chacun des nœuds enfants cibles à un identifiant de liaison respectif, l'identifiant de liaison respectif étant basé sur au moins un paramètre hors-chaîne.

13. Procédé mis en œuvre par ordinateur pour l'accès à une structure arborescente superposée sur une chaîne de blocs, la structure arborescente comprenant un ensemble de nœuds et d'arêtes entre les nœuds, chaque nœud étant une transaction différente enregistrée sur la chaîne de blocs (150), chaque arête connectant un nœud enfant respectif à un nœud parent respectif, l'un des nœuds parents étant un nœud racine de la structure arborescente, chaque nœud étant associé à une clé respective, chaque nœud enfant comprenant i) un identifiant de transaction respectif, et ii) une signature correspondant à la clé respective associée au nœud parent respectif, un nœud parent cible respectif étant connecté à une pluralité de nœuds enfants cibles, chaque nœud enfant cible comprenant une charge utile de données respective, chacun des nœuds enfants cibles étant associé à un identifiant de liaison respectif, l'identifiant de liaison respectif étant basé sur au moins un paramètre hors-chaîne, et le procédé étant exécuté par un accesseur d'arborescence et comprenant :

l'obtention du nœud parent cible ;
l'obtention d'un ou plusieurs identifiants de liaison ;
l'identification d'un ou plusieurs des nœuds enfants cibles qui sont associés à l'un respectif desdits un ou plusieurs identifiants de liaison obtenus ; et
la création d'une version de la structure arborescente comprenant un ou plusieurs des nœuds enfants cibles identifiés, mais pas les nœuds enfants cibles qui ne sont pas identifiés comme étant associés a l'un respectif desdits un ou plusieurs identifiants de liaison obtenus.

14. Un système d'ordinateur, comprenant :

un appareil de traitement comprenant une ou plusieurs unités de traitement, et
une mémoire comprenant une ou plusieurs unités de mémoire ;
la mémoire stockant un code conçu pour être exécuté sur l'appareil de traitement, le code étant configuré pour, lorsqu'il est exécuté sur l'appareil de traitement, exécuter des opérations selon l'une quelconque des revendications précédentes.

15. Programme d'ordinateur mis en œuvre sur un stockage lisible par ordinateur, le programme d'ordinateur comprenant un code configuré pour, lorsqu'il est exécuté sur une ou plusieurs unités de traitement, exécuter des opérations selon l'une quelconque des revendications 1 à 13.

# Figure 1

# Figure 2

152i

202  $Tx_0$  201

| $TxID_0$ | |
|---|---|
| Input(s) | Output(s) |
| **Input** <br> • Pointer to previous $Tx$ <br> • Index of UTXO in previous $Tx$ <br> • Unlocking script for unlocking from previous party <br><br> ⋮ <br><br> Optional further inputs <br><br> ⋮ | $UTXO_0$ <br> • Amount <br> • Locking script locking to Alice <br><br><br> ⋮ <br><br> Optional further $UTXO$s <br><br> ⋮ |

203

202

152j

$Tx_1$  201  203

| $TxID_1$ | |
|---|---|
| Input(s) | Output(s) |
| **Input** <br> • Pointer to $Tx_0$ <br> • Index of $UTXO_0$ [within $Tx_0$] <br> • Unlocking script for unlocking $UTXO_0$ from Alice <br><br> ⋮ <br><br> Optional further inputs <br><br> ⋮ | $UTXO_1$ <br> • Amount <br> • Locking script locking to Bob <br><br><br> ⋮ <br><br> Optional further $UTXO$s <br><br> ⋮ |

Transaction
from Alice to Bob

↓

Validated by running: Alice's
locking script (from output of $Tx_0$),
together with Bob's unlocking
script (as input to $Tx_1$). This checks
that Bob's unlocking script in $Tx_1$
meets the condition(s) defined in
Alice's locking script in $Tx_0$.

# Figure 3

300

Domain $P_0$

$P_0$
$TxID_0$

301

302

302

302'

Domain $P_1$

Domain $P_2$

$P_1$
$TxID_1$

301

$P_2$
$TxID_2$

$P_2$
$TxID_2'$

301

301'

302

Domain $P_{1,1}$

$P_{1,1}$
$TxID_{1,1}$

301

$P_{1,2}$
$TxID_{1,2}$

302

302

$P_{1,1,1}$
$TxID_{1,1,1}$

$P_{1,1,2}$
$TxID_{1,1,2}$

301

301

Figure 4

152P/301P

202

| Metanet parent node transaction: $TxID_{parent}$ | |
|---|---|
| Input | Output |
| ... | OP_RETURN<br><metanet flag><br>$<P_{parent}>$ |

203

Metanet edge 302

152C/301C

202

| Metanet node transaction: $TxID_{node}$ | |
|---|---|
| Input | Output |
| $<Sig\ P_{parent}>$<br>$<P_{parent}>$ | OP_RETURN <metanet flag> $<P_{node}>$<br>$<TxID_{parent}><Data>$ |

203

152F

202

| Funding transaction: $TxID_{funding}$ | |
|---|---|
| Input | Output |
| $<Sig\ P_{funding}>$<br>$<P_{funding}>$ | OP_DUP OP_HASH160<br>$<H(P_{parent})>$<br>OP_EQUALVERIFY<br>OP_CHECKSIG |

203

402
Blockchain edge

# Figure 5

# Figure 6

# Figure 7

EP 4 289 105 B1

# Figure 8

# Figure 9A

| TxID B | |
|---|---|
| Input | Output |
| Sig $P_A$ | OP_RETURN $P_B$ TxID A, day |

| TxID D | |
|---|---|
| Input | Output |
| Sig $P_B$ | OP_RETURN $P_A$ |

| TxID A | |
|---|---|
| Input | Output |
| ... | OP_RETURN $P_A$ |

| TxID C | |
|---|---|
| Input | Output |
| Sig $P_A$ | OP_RETURN $P_C$ TxID A, day+1 |

# Figure 9B

| TxID B | |
|---|---|
| Input | Output |
| Sig $P_A$ | OP_RETURN $P_B$ Link ID |

Link ID function (TxID A, day)

| TxID A | |
|---|---|
| Input | Output |
| ... | OP_RETURN $P_A$ |

Link ID function (TxID A, day+1)

| TxID C | |
|---|---|
| Input | Output |
| Sig $P_A$ | OP_RETURN $P_C$ Link ID |

36

# Figure 10A

```
                        ┌──────────┐
                        │   Root   │
                        └──────────┘
         ┌──────────────┐  ┌──────────────┐  ┌──────────────┐
         │  OP_RETURN   │  │  OP_RETURN   │  │  OP_RETURN   │
         │  Pₐ, User A  │  │  P_B, User B │  │  P_C, User B │
         └──────────────┘  └──────────────┘  └──────────────┘
```

# Figure 10A

```
                        ┌──────────┐
                        │   Root   │
                        └──────────┘
         ┌──────────────┐  ┌──────────────┐  ┌──────────────┐
         │  OP_RETURN   │  │  OP_RETURN   │  │  OP_RETURN   │
         │   Pₐ, L1     │  │   P_B, L2    │  │   P_C, L3    │
         └──────────────┘  └──────────────┘  └──────────────┘
```

```
L1 = link_ID(Tx1, parameters, User A)
L2 = link_ID(Tx2, parameters, User B)
L3 = link_ID(Tx3, parameters, User B)
```

# Figure 11

Initialize new off-chain overlay tree structure (e.g. Metanet) — S101

Obtain target parent node — S102

Collect all transactions originating from the target parent node — S103

For each transaction, check that it meets requirements of the overlay network protocol — S104

For each transaction, check that the link ID is valid — S105

All checks met?

S107 — Discard transaction

S108 — Add transaction to the tree structure

# Figure 12

# Figure 13

Alice's view

```
                    Website
                     root

        Public news              Personal
                                  section

   General      Weather      Hi Alice    Football
    news                                  news
```

Bob's view

```
                    Website
                     root

        Public news              Personal
                                  section

   General      Weather      Hi Bob      Culture
    news
```

## REFERENCES CITED IN THE DESCRIPTION

**Patent documents cited in the description**

- WO 2020109908 A1